# EUROPEAN PATENT SPECIFICATION

(11) **EP 1 607 173 B1**
(45) Date of publication and mention of the grant of the patent: **02.05.2007**
(21) Application number: 05425420.6
(22) Date of filing: 10.06.2005
(51) Int. Cl.: B23Q 1/66, B23Q 1/52

(54) **Tilt table work holding unit for machine tools**
Schwenktisch-Werkstückhalterung für Werkzeugmaschinen
Unité porte-pièce à table basculante pour machine-outils

(30) Priority: 14.06.2004 IT BO20040375
(43) Date of publication of application: 21.12.2005
(73) Proprietor: Jobs S.p.A., 29100 Piacenza (IT)
(72) Inventor: Ferrari, Maurizio, 26026 Pizzighettone (Cremona) (IT); Schiavi, Bruno, 29100 Piacenza (IT)
(74) Representative: Lanzoni, Luciano

(56) References cited:
- EP-A- 0 463 453
- EP-A- 1 004 392
- EP-A- 1 080 828
- US-A- 4 858 301

## Description

The present invention relates to a work holding unit for machine tools.

In particular, the invention relates to a work holding unit by which a workpiece, appearing for example as a flat body or sheet, can be taken up and secured in a substantially horizontal position, then fed to a machining station of a machine tool and set in a substantially vertical position at the selfsame station.

The workpiece is machined in a vertical position by reason of the fact that when placed upright, the machining swarf can be removed easily by gravity, together with the cooling and/or cutting fluids employed, and besides, the upright position is now generally dictated by the space-saving vertical design of modern-day machine tools.

In effect, appreciably large quantities of swarf are generated when machining workpieces to produce components appearing relatively slim but of complex geometry, such as wing components for aircraft.

The current prior art embraces work holding units equipped with a substantially rectangular table, mounted to a shaft of which the axis is disposed horizontally and the opposite ends are supported by brackets.

The table is capable of angular motion about the horizontal shaft, induced by respective actuator means, between a substantially horizontal position in which the work is placed on the top face and clamped, and a vertical position in which the top face is directed toward the aforementioned machining station.

In the latter position, the table is secured and supported rigidly by a fixed frame in the form of a surround, engaging at least the top longitudinal edge of the table and affording a window through which tools are able to address the machinable surface of the workpiece in its entirety.

Clearly, the proportions both of the table and of the fixed frame are dictated by the dimensions of the sheet being machined.

In the case of relatively small workpieces, the design of these conventional work holding units is in general considered sufficiently able to ensure a rigidity, with the table in the vertical position, such as will allow the work to be machined with extreme precision.

Where the work to be machined is of relatively large dimensions, as in the case of wing sections, the work holding units briefly described above do not afford sufficient rigidity, with the table in the vertical position, to guarantee the same high precision in machining operations.

For example, a known unit, upon which the preamble of claim 1 is based, can been seen in EP 1 080 828. In this document, a pallet-swing apparatus is described. The pallet-swing apparatus comprises: arcuate guide members disposed in a plane perpendicular to the axis with its arc centre coinciding with the axis; a pair of frames supporting the guide members; a movable supporter engaged with the guide members movably along the guide members for supporting the pallet; and drive means for driving the movable supporter to move the movable supporter along the guide members.

Another example can been seen in EP 1 004 392. In this document a tilting table for a machine tool is described. It comprises a clamping plate pivotably attached to one side of the basis frame by bearing bolts, and inside the frame mounted a geared motor with a shaft extending parallel to the plate pivot axis. Pinions engage with gear segments attached to the ribbed part of the plate. Holder brackets opposite and extending parallel to the gear segments are secured to the ribbed part, cavities being provided in the frame for these brackets. A support block forming the counter-surface for the brackets is secured to the frame.

Accordingly, the object of the present invention is to eliminate the aforementioned drawbacks by providing a work holding unit for machine tools such as will afford superior rigidity when in an upright machining position.

The stated object is realized according to the present invention in a work holding unit for machine tools of which the characterizing features are as recited in claim 1.

The invention will now be described in detail, by way of example, with the aid of the accompanying drawings, in which:
- figures 1 and 2 illustrate the work holding unit according to the present invention, associated with a machine tool, viewed schematically in a side elevation with certain parts omitted and shown in two different operating positions;
- figure 3 is an exploded perspective view of the work holding unit according to the invention;
- figure 4 is a schematic plan view showing two work holding units associated with a machine tool.

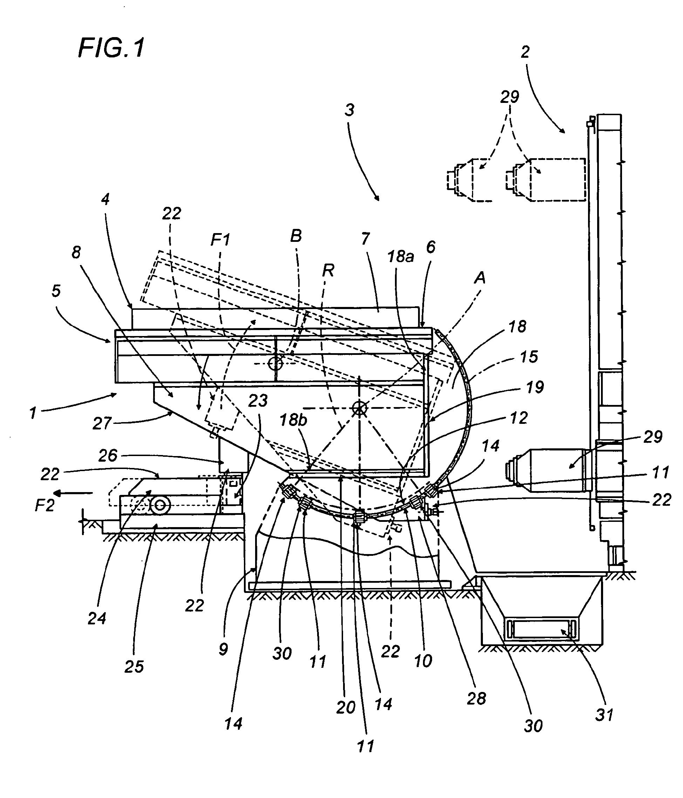

Referring to figures 1, 2 and 3, numerals 1 and 2 indicate a work holding unit and a machine tool, respectively, together constituting equipment 3 on which to machine a workpiece 4 supported by the work holding unit 1.

In particular, the work holding unit 1 comprises a tilting work holder table 5 able to pivot about an axis A of rotation between two operating positions, as will be explained in due course.

The table 5 presents what is essentially a right trapezoidal outline when seen in section, normal to the axis A of rotation, and includes a platform 6 coinciding with the greater base of the trapezoid, parallelepiped in shape and with a predominating longitudinal axis B that extends parallel to the axis A of rotation.

In addition to the platform 6, which serves to accommodate and support a workpiece 4 appearing in the example illustrated as a flat body or sheet 7, the table 5 incorporates a support member 8 rigidly associated with the platform 6.

Numeral 9 denotes a bed delimited uppermost by a concave surface 9' of cylindrical geometry centred on an axis coinciding with the axis A of rotation, and subtended by a radius R of predetermined value. The bed 9 stands directly on the floor and supports the table 5 by way of coupling means, composed of slides and tracks, denoted 10 in their entirety.

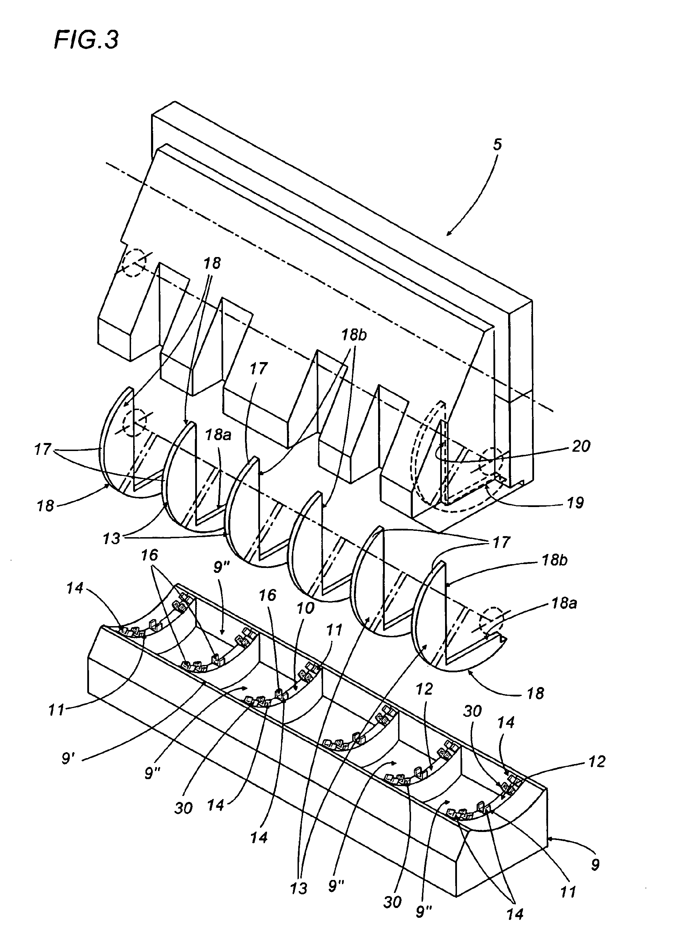

Such coupling means 10 comprise a plurality of coupling devices 11 aligned, as illustrated in the example of figure 3, on a direction parallel to the axis A of rotation and spaced apart at intervals along the longitudinal dimension of the support member 8.

Each device 11 includes a slide way 12 afforded by the concave surface 9' and a shoe 13 rigidly associated with the support member 8.

In practice, the concave surface 9' is a skeleton surface punctuated by a plurality of recesses 9" arranged in alternation with the slide ways 12 along its longitudinal dimension, for a reason that will be made clear in due course.

More exactly, each slide way 12 consists in a plurality of discrete channel sections 14 arranged along a circular arc 15 and forming a track 16 able to accommodate the sliding motion of a cylindrical rim 17 presented by a disc-like element 18, having the same radius R as the concave surface 9' and centred on the axis A of rotation, whenever the work holder table 5 is caused to pivot on this same axis A. The disc-like element 18 thus constitutes the aforementioned shoe 13.

Each disc-like element 18 presents two mutually perpendicular sides 18a and 18b that can be matched to two mutually perpendicular faces of the table 5, denoted 19 and 20 respectively; in practice, the disc-like element 18 of each shoe 13 will be proportioned so as to project a certain radial distance beyond the two mutually perpendicular faces 19 and 20 of the table 5.

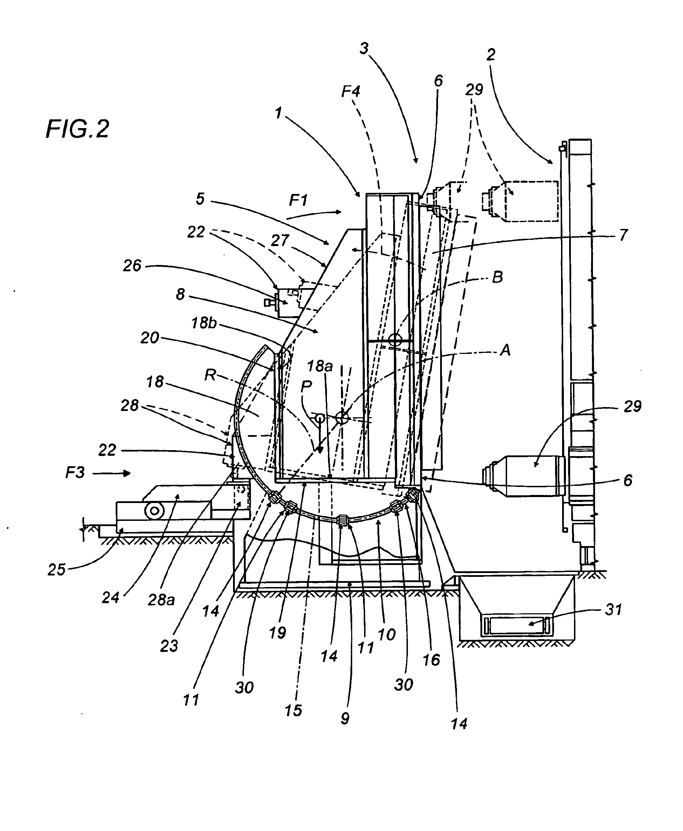

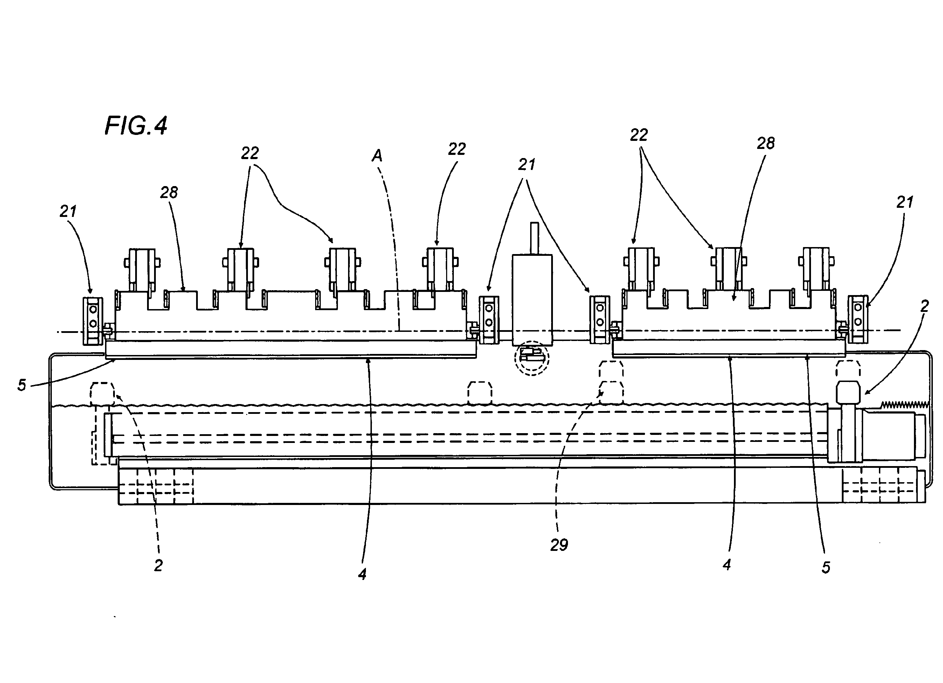

The interface between the work holder table 5 and the bed 9 consists in a plurality of the coupling devices 11 aforementioned, arranged along the full length of the support member 8, which, through the agency of actuator means indicated schematically by blocks denoted 21 in figure 4, can be made to pivot between the aforementioned two operating positions, namely a loading position illustrated in figure 1, in which the workpiece 4 is placed on and clamped to the platform 6, disposed horizontally, and a machining position illustrated in figure 2, with the platform 6 disposed substantially vertical so that the workpiece 4 can be engaged by the machine tool 2.

The work holder table 5 can be secured by locking means, denoted 22, in both of the two operating positions described. Such locking means 22 include a plurality of bearing and travel limiting elements denoted 23, interacting with the table 5, which are positioned on the side of the axis A of rotation remote from the machine tool 2 and aligned along a direction parallel to the selfsame axis A.

Each bearing and travel limiting element 23 comprises a slide 24 mounted to respective fixed support means 25 and capable of motion induced by actuator means (not illustrated) in a direction transverse to the axis A of rotation, between a first position and a second position, for reasons that will become clear in due course.

The aforementioned locking means 22 comprise first locating elements 26, each designed to operate in conjunction with a respective bearing and travel limiting element 23 to the end of locking the table 5 in the position adopted when a workpiece 4 is loaded.

Such first locating elements 26 take the form of substantially cylindrical blocks disposed with axes at right angles to the plane occupied by the platform 6 and fixed to the face 27 of the table 5 opposite to the aforementioned face denoted 19.

The locking means 22 also comprise second locating elements 28, each designed to operate in conjunction with a respective bearing and travel limiting element 23 to the end of securing the table 5 in the vertical position, adopted when the workpiece 4 is machined.

Such second locating elements 28 take the form of substantially trapezoidal blocks fixed to the face of the table 5 denoted 20, each disposed with an active surface 28a occupying the same plane as the face denoted 19.

In operation, referring initially to figure 1, the work holder table 5 is positioned horizontally to allow loading of the workpiece 4, with the first locating elements 26 engaging the respective bearing and travel limiting elements 23 in the first operating position, and the slide 24 in the relative first position of close proximity to the bed 9. In this position, the second locating elements 28 occupy the corresponding recesses 9" afforded by the bed 9.

Once the workpiece 4 has been secured to the platform 6, by clamping means not illustrated, the aforementioned actuator means 21 are piloted to induce a rotational movement of the table 5 in the direction of the arrow denoted F1, clockwise as viewed in figure 1. At the same time, the slide 24 moves in the direction of the arrow denoted F2, away from the bed 9, assuming the aforementioned second position illustrated by phantom lines in figure 1 and allowing the passage of the second locating elements 28.

As indicated by the phantom lines of figure 2, the work holder table 5 is caused to rotate through an arc greater than 90° so as to avoid any contact being made between the slide 24, now moving in the direction denoted F3 to resume its former position of proximity to the bed 9, and the second locating elements 28 emerging from the recesses 9" of the bed 9.

At this juncture, the table 5 will be caused by the actuator means 21 to rotate inversely in the direction denoted F4 until the active surface 28a of each second locating element 28 is brought into contact with the relative slide 24. This has the effect of easing the platform 6 of the table 5 into the vertical position, whereupon the tool heads 29 of the machine tool 2 can engage the workpiece 4.

Advantageously, in order to improve the stability of the unit 1 during machining operations on the workpiece 4, the centre of balance P of the work holder table 5, when occupying the substantially vertical position in which the workpiece 4 is machined, will be located between the axis A of rotation and the bearing and travel limiting elements 23.

Importantly, whenever the table 5 is caused to rotate in one direction or the other, the shoes 13 will slide in the tracks 16 afforded by the channel sections 14 arranged along the circular arc 15, so that the weight of the table is taken permanently by the floor. Also installed along the arc 15 are braking means 30 designed to engage each respective shoe 13 and thus check the angular momentum of the table 5.

31 denotes a vessel serving to collect the swarf generated by machining operations performed on the workpiece 4, also the cooling and/or lubricating fluids used in these same operations.

## Claims

1. A work holding unit for machine tools, comprising a work holder table (5) pivotable on respective support means (9) about a substantially horizontal axis (A) of rotation between a substantially horizontal position in which a workpiece (4) is loaded and clamped, and a substantially vertical position facing toward the machine tool (2), in which the workpiece (4) is machined, wherein
the work holder table (5) is mounted to the respective support means (9) by way of slide and track coupling means (10); the slide and track coupling means (10) comprising at least one slide and track coupling device (11) incorporating a slide way (12) of arcuate profile concentric with the axis (A) of rotation of the work holder table (5), and a shoe (13) rigidly associated with the work holder table (5) and slidable along the way (12); wherein the slide way (12) consists in a track (16) slidably accommodating the shoe (13); **characterized in that** shoe (13) consists in a disc-like segment (18) mounted to the work holder table (5) concentrically with the axis (A) of rotation and inserted slidably in the track (16).

2. A work holding unit as in claim 1, wherein the track (16) comprises a plurality of discrete channel sections (14) arranged along the arc (15) described by the slide way (12).

3. A work holding unit as in claim 1, wherein the slide and track coupling means (10) comprise a plurality of slide and track coupling devices (11) arranged along an axis of the work holder table (5) parallel to the axis (A) of rotation, each comprising a respective shoe (13) concentric with the axis (A) of rotation and associated rigidly with the work holder table (5), and a corresponding track (16) afforded by the support means (9).

4. A work holding unit as in claim 1, comprising means (22) by which to lock the work holder table (5) both in the position allowing a workpiece (4) to be loaded and clamped, and in the position allowing the workpiece (4) to be machined.

5. A work holding unit as in claim 4, wherein the locking means (22) comprise at least one bearing and travel limiting element (23) interacting with the work holder table (5), positioned on the side of the selfsame table (5) remote from the machine tool (2), relative to the axis (A) of rotation.

6. A work holding unit as in claim 5, wherein the locking means (22) comprise at least one first locating element (26) and at least one second locating element (28) associated rigidly with the work holder table (5) and operating in conjunction with the bearing and travel limiting element (23) when the work holder table (5) occupies the position in which the workpiece (4) is loaded and clamped and the position in which the workpiece (4) is machined, respectively.

7. A work holding unit as in claim 6, wherein the bearing and travel limiting element (23) is capable of movement, transversely to the axis (A) of rotation of the work holder table (5), between a forward locking position and a retracted position of disengagement from the first and second locating elements (26, 28).

8. A work holding unit as in claim 7, comprising a plurality of bearing and travel limiting elements (23) operating in conjunction with respective first locating elements (26) and second locating elements (28), wherein the bearing and travel limiting elements (23) are arranged along a direction parallel to the longitudinal axis (B) of the work holder table (5) and to the axis (A) of rotation.

9. A work holding unit as in claim 1, wherein the slide and track coupling device (10) comprises braking means (30) interacting with the respective shoe (13) and able to check the angular momentum of the work holder table (5) when tilted about the axis (A) of rotation.

10. A work holding unit as in claims 1 to 9, wherein the work holder table (5) presents a substantially trapezoidal outline, viewed in section transversely to the axis (A) of rotation.

11. A work holding unit as in claims 1 to 10, wherein the centre of balance (P) of the work holder table (5), when occupying the substantially vertical position allowing a workpiece (4) to be machined, is located between the axis (A) of rotation and the bearing and travel limiting elements (23).

## Patentansprüche

1. Werkstückhaltereinheit für Werkzeugmaschinen, enthaltend einen Werkstückaufspanntisch (5), der schwenkbar ist auf jeweiligen Haltemitteln (9) um eine im wesentlichen horizontale Drehachse (A) zwischen einer im wesentlichen horizontalen Position, in welcher ein Werkstück (4) geladen und aufgespannt wird, und einer im wesentlichen vertikalen und der Werkzeugmaschine (2) zugewandten Position, in welcher das Werkstück (4) bearbeitet wird, bei welcher der Werkstückaufspanntisch (5) an den jeweiligen Haltemitteln (9) mit Hilfe von Schlitten- und Führungs-Kupplungsmitteln (10) montiert ist; wobei die Schlitten- und Führungs-Kupplungsmittel (10) wenigstens eine Schlitten- und Führungs-Kupplungsvorrichtung (11) umfassen, enthaltend eine Schlittenführung (12) von gebogenem Profil und konzentrisch mit der Drehachse (A) des Werkstückaufspanntisches (5), sowie einen Schuh (13), der starr mit dem Werkstückaufspanntisch (5) verbunden und gleitbar ist entlang der Führung (12); bei welcher die Schlittenführung (12) aus einer gleitbar den Schuh (13) aufnehmenden Schiene (16) besteht; **dadurch gekennzeichnet, dass** der Schuh (13) aus einem scheibenförmigen Segment (18) besteht, montiert an dem Werkstückaufspanntisch (5) konzentrisch mit der Drehachse (A) und gleitbar eingesetzt in die Schiene (16).

2. Werkstückhaltereinheit nach Patentanspruch 1, bei welcher die Schiene (16) eine Anzahl von diskreten kanalförmigen Abschnitten (14) enthält, angeordnet entlang dem durch die Schlittenführung (12) beschriebenen Bogen (15).

3. Werkstückhaltereinheit nach Patentanspruch 1, bei welcher die Schlitten- und Führungs-Kupplungsmittel (10) eine Anzahl von Schlitten- und Führungs-Kupplungsvorrichtungen (11) enthalten, angeordnet entlang einer Achse des Werkstückaufspanntisches (5) parallel zu der Drehachse (A), wobei jede einen entsprechenden Schuh (13) aufweist, konzentrisch mit der Drehachse (A) und starr mit dem Werkstückaufspanntisch (5) verbunden, sowie eine entsprechende Schiene (16), aufgewiesen von den Haltemitteln (9).

4. Werkstückhaltereinheit nach Patentanspruch 1, enthaltend Mittel (22), durch welche der Werkstückaufspanntisch (5) in der Position festgestellt wird, in welcher das Laden und Aufspannen des Werkstückes (4) erlaubt ist, und in der Position, in welcher das Werkstück (4) bearbeitet wird.

5. Werkstückhaltereinheit nach Patentanspruch 4, bei welcher die Feststellmittel (22) wenigstens ein Auflage- und Hubbegrenzungselement (23) enthalten, das mit dem Werkstückaufspanntisch (5) zusammenwirkt, positioniert auf der Seite des Tisches (5) selbst, die sich im Verhältnis zu der Drehachse (A) von der Werkzeugmaschine (2) entfernt befindet.

6. Werkstückhaltereinheit nach Patentanspruch 5, bei welcher die Feststellmittel (22) wenigstens ein erstes Anschlagelement (26) und wenigstens ein zweites Anschlagelement (28) enthalten, starr zugeordnet dem Werkstückaufspanntisch (5) und zusammen mit dem Auflage- und Hubbegrenzungselement (23) arbeitend, wenn der Werkstückaufspanntisch (5) die Position belegt, in welcher das Werkstück (4) geladen und aufgespannt wird, beziehungsweise die Position, in welcher das Werkstück (4) bearbeitet wird.

7. Werkstückhaltereinheit nach Patentanspruch 6, bei welcher das Auflage- und Hubbegrenzungselement (23) in der Lage ist, eine Bewegung quer zu der Drehachse (A) des Werkstückaufspanntisches (5) auszuführen, und zwar zwischen einer vorgeschobenen Feststellposition und einer zurückgezogenen Position der Freigabe von den ersten und zweiten Anschlagelementen (26, 28).

8. Werkstückhaltereinheit nach Patentanspruch 7, enthaltend eine Anzahl von Auflage- und Hubbegrenzungselementen (23), die zusammen mit den jeweiligen ersten Anschlagelementen (26) und zweiten Anschlagelementen (28) arbeiten, bei welcher die Auflage- und Hubbegrenzungselemente (23) entlang einer Richtung parallel zu der Längsachse (B) des Werkstückaufspanntisches (5) und zu der Drehachse (A) angeordnet sind.

9. Werkstückhaltereinheit nach Patentanspruch 1, bei welcher die Schlitten- und Führungs-Kupplungsvorrichtung (10) Bremsmittel (30) enthält, die mit dem jeweiligen Schuh (13) zusammenwirken und in der Lage sind, das Drehimpulsmoment des Werkstückaufspanntisches (5) zu kontrollieren, wenn dieser um die Drehachse (A) geschwenkt wird.

10. Werkstückhaltereinheit nach den Patentansprüchen von 1 bis 9, bei welcher der Werkstückausspanntisch (5) einen im wesentlichen trapezförmigen Umriss aufweist, gesehen im Schnitt quer zu der Drehachse (A).

11. Werkstückhaltereinheit nach den Patentansprüchen von 1 bis 10, bei welcher der Schwerpunkt (P) des Werkstückaufspanntisches (5), wenn er die im wesentlichen vertikale Position belegt, die es dem Werkstück (4) erlaubt, bearbeitet zu werden, zwischen der Drehachse (A) und den Auflage- und Hubbegrenzungselementen (23) liegt.

## Revendications

1. Une unité porte-pièce pour machines-outils, comprenant une table porte-pièce (5) pouvant pivoter sur des moyens de support (9) respectifs autour d'un axe de rotation (A) essentiellement horizontal entre une position essentiellement horizontale, dans laquelle une pièce à usiner (4) est chargée et bloquée, et une position essentiellement verticale orientée vers la machine-outil (2), dans laquelle ladite pièce (4) est usinée, où la table porte-pièce (5) est montée sur les moyens de support (9) respectifs par l'intermédiaire de moyens d'accouplement (10) à guide-rail ; les moyens d'accouplement (10) à guide-rail comprenant au moins un dispositif d'accouplement (11) à guide-rail comprenant un guide (12) à profil arqué concentrique à l'axe de rotation (A) de la table porte-pièce (5), et un patin (13) associé de façon rigide à la table porte-pièce (5) et pouvant coulisser le long du guide (12) ; et où le guide (12) consiste en un rail (16) logeant de façon coulissante le patin (13) ; ladite unité étant **caractérisée en ce que** le patin (13) consiste en un segment discoïdal (18) monté sur la table porte-pièce (5) concentriquement à l'axe de rotation (A) et introduit de façon coulissante dans le rail (16).

2. L'unité porte-pièce selon la revendication 1, **caractérisée en ce que** le rail (16) comprend une pluralité de sections discrètes (14) disposées le long de l'arc (15) décrit par le guide (12).

3. L'unité porte-pièce selon la revendication 1, **caractérisée en ce que** les moyens d'accouplement (10) à guide-rail comprennent une pluralité de dispositifs d'accouplement (11) à guide-rail disposés le long d'un axe de la table porte-pièce (5) parallèle à l'axe de rotation (A), comprenant chacun un patin (13) respectif concentrique à l'axe de rotation (A) et associé de façon rigide à la table porte-pièce (5), et un rail (16) correspondant présenté par les moyens de support (9).

4. L'unité porte-pièce selon la revendication 1, **caractérisée en ce qu'**elle comprend des moyens (22) servant à bloquer la table porte-pièce (5) aussi bien dans la position de chargement et de blocage d'une pièce à usiner (4) que dans la position d'usinage de ladite pièce (4).

5. L'unité porte-pièce selon la revendication 4, **caractérisée en ce que** les moyens de blocage (22) comprennent au moins un élément d'appui et de fin de course (23) qui interagit avec la table porte-pièce (5) et est situé du côté de ladite table (5), c'est-à-dire à l'opposé de la machine-outil (2) par rapport à l'axe de rotation (A).

6. L'unité porte-pièce selon la revendication 5, **caractérisée en ce que** les moyens de blocage (22) comprennent au moins un premier élément de butée (26) et au moins un deuxième élément de butée (28) qui sont associés de façon rigide à la table porte-pièce (5) et coopèrent avec l'élément d'appui et de fin de course (23) quand la table porte-pièce (5) est dans la position de chargement et de blocage de la pièce à usiner (4) et, respectivement, dans la position d'usinage de ladite pièce (4).

7. L'unité porte-pièce selon la revendication 6, **caractérisée en ce que** l'élément d'appui et de fin de course (23) peut se déplacer, transversalement à l'axe de rotation (A) de la table porte-pièce (5), entre une position sortie de blocage et une position rentrée de désengagement des premier et deuxième éléments de butée (26, 28).

8. L'unité porte-pièce selon la revendication 7, comprenant une pluralité d'éléments d'appui et de fin de course (23) qui coopèrent avec des premiers et des deuxièmes éléments de butée (26, 28) respectifs, **caractérisée en ce que** les éléments d'appui et de fin de course (23) sont disposés suivant une direction qui est parallèle à l'axe longitudinal (B) de la table porte-pièce (5) et à l'axe de rotation (A).

9. L'unité porte-pièce selon la revendication 1, **caractérisée en ce que** le dispositif d'accouplement (10) à guide-rail comprend des moyens de freinage (30) qui interagissent avec le patin (13) respectif et sont conçus pour contrôler le moment cinétique de la table porte-pièce (5) quand celle-ci est basculée autour de l'axe de rotation (A).

10. L'unité porte-pièce selon les revendications de 1 à 9, **caractérisée en ce que** la table porte-pièce (5) a un contour essentiellement trapézoïdal quand elle est vue en coupe transversalement à l'axe de rotation (A).

11. L'unité porte-pièce selon les revendications de 1 à 10, **caractérisée en ce que** le centre d'équilibre (P) de la table porte-pièce (5), quand celle-ci est dans la position essentiellement verticale d'usinage d'une pièce (4), est situé entre l'axe de rotation (A) et les éléments d'appui et de fin de course (23)
